# EUROPEAN PATENT APPLICATION

(11) **EP 4 847 958 A1**
(43) Date of publication of application: **02.12.2026**
(21) Application number: 24926774.1
(22) Date of filing: 18.10.2024
(51) Int. Cl.: G01S 13/42

(54) **TERMINAL POSITIONING METHOD, COMPUTER-READABLE STORAGE MEDIUM, AND ELECTRONIC DEVICE**

(30) Priority: 26.02.2024 CN 202410210459
(71) Applicant: ZTE CORPORATION, Shenzhen, Guangdong 518057 (CN)
(72) Inventor: ZHAO, Hui, Shenzhen, Guangdong 518057 (CN); SHAO, Ronglin, Shenzhen, Guangdong 518057 (CN)
(74) Representative: Chimini, Francesco
(86) International application number: PCT/CN2024/125904
(87) International publication number: WO 2025/179912

(57) **Abstract**

Embodiments of the present disclosure provide a terminal positioning method, a computer-readable storage medium, and an electronic device. The method is applied to indoor settings, and comprises: a target terminal receives a positioning indication sent by an auxiliary terminal, and in response to the positioning indication, the target terminal transmits millimeter waves to perform distance measurement on the surrounding environment of the target terminal so as to obtain coordinate data of the target terminal; the target terminal compares the coordinate data with pre-stored positioning assistance data about the surrounding environment of the target terminal so as to determine position information of the target terminal; and the target terminal sends the position information to the auxiliary terminal.

## Description

### Cross-Reference to Related Application

The present disclosure is based on and claims priority to Chinese Patent Application No. 2024102104598, filed on February 26, 2024, entitled "Terminal Positioning Method, Computer-Readable Storage Medium, and Electronic Device", the entire contents of which are incorporated herein by reference.

### Technical Field

Embodiments of the present disclosure relate to the field of communications, and in particular, to a terminal positioning method, a computer-readable storage medium, and an electronic device.

### Background

In modern society, people are highly dependent on target terminals such as mobile phones. Meanwhile, mobile phones are frequently set to silent mode. In daily life, it is a common occurrence for users to be unable to recall in which corner of a room their mobile phones are placed, necessitating a prolonged search to find the mobile phone, which causes considerable inconvenience to daily life.

In related technologies, mobile terminals are mostly designed with a positioning function. The positioning function refers to a technology or service that obtains location information of a terminal user through specific positioning technologies, and marks the location of a positioned object on an electronic map. Positioning technologies mainly include Global Positioning System (GPS) positioning and cellular positioning using the base stations of mobile operator networks. These technologies are generally applied to large outdoor areas, and there are few functions specifically designed for indoor terminal positioning. Therefore, it is difficult to accurately position a terminal located indoors.

### Summary

The embodiments of the present disclosure provide a terminal positioning method, a computer-readable storage medium, and an electronic device, which may at least solve the problem in related technologies that a terminal located in an indoor scenario cannot be accurately positioned.

According to an embodiment of the present disclosure, there is provided a terminal positioning method, including: receiving, by a target terminal, a positioning instruction sent by an auxiliary terminal, and transmitting, by the target terminal in response to the positioning instruction, a millimeter wave to perform distance measurement on a surrounding environment of the target terminal, thereby obtaining coordinate data of the target terminal; comparing, by the target terminal, the coordinate data with pre-stored positioning assistance data about the surrounding environment of the target terminal to determine position information of the target terminal; and sending, by the target terminal, the position information to the auxiliary terminal.

According to another embodiment of the present disclosure, there is provided a terminal positioning method, including: sending, by an auxiliary terminal, a positioning instruction to a target terminal, wherein the positioning instruction is configured to cause the target terminal to transmit, in response to the positioning instruction, a millimeter wave to perform distance measurement on a surrounding environment of the target terminal, thereby obtaining coordinate data of the target terminal; and receiving, by the auxiliary terminal, position information of the target terminal determined by the target terminal according to the coordinate data and pre-stored positioning assistance data about the surrounding environment of the target terminal.

According to yet another embodiment of the present disclosure, there is further provided a computer-readable storage medium, wherein a computer program is stored on the computer-readable storage medium, and the computer program is configured to, when executed, implement the operations of any one of the foregoing method embodiments.

According to yet another embodiment of the present disclosure, there is further provided an electronic device, including a memory and a processor, wherein the computer program is stored on the memory and is executable on the processor, and the processor is configured to run the computer program to implement the operations of any one of the foregoing method embodiments.

### Brief Description of the Drawings

FIG. 1 is a block diagram of a hardware structure of a computer terminal for a terminal positioning method according to an embodiment of the present disclosure;
FIG. 2 is a flowchart of a terminal positioning method according to an embodiment of the present disclosure;
FIG. 3 is a schematic diagram of indoor planar dimensions according to an embodiment of the present disclosure;
FIG. 4 is a first flowchart of data storage according to an embodiment of the present disclosure;
FIG. 5 is a second flowchart of data storage according to an embodiment of the present disclosure;
FIG. 6 is a flowchart of a terminal positioning method according to another embodiment of the present disclosure;
FIG. 7 is a schematic diagram of azimuth calibration of a millimeter wave antenna of a millimeter wave module (mmW module) according to an embodiment of the present disclosure;
FIG. 8 is a structural block diagram of a terminal positioning apparatus according to an embodiment of the present disclosure;
FIG. 9 is a structural block diagram of a terminal positioning apparatus according to another embodiment of the present disclosure;
FIG. 10 is a schematic diagram of a structure of a terminal positioning system according to an embodiment of the present disclosure; and
FIG. 11 is a schematic diagram of operation of a data processing module according to an embodiment of the present disclosure.

### Detailed Description of the Embodiments

The embodiments of the present disclosure will be described in detail below with reference to the accompanying drawings and in conjunction with the embodiments.

It will be appreciated that the terms "first", "second", and the like in the specification, claims, and the above drawings of the present disclosure are used for distinguishing similar objects and are not necessarily intended to describe a specific order or a sequential order.

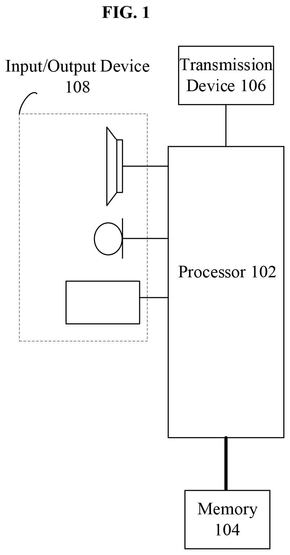

The method embodiments provided in the embodiments of the present disclosure may be executed in a mobile terminal, a computer terminal, or a similar computing apparatus. Taking execution on a computer terminal as an example, FIG. 1 is a block diagram of a hardware structure of a computer terminal for a terminal positioning method according to an embodiment of the present disclosure. As shown in FIG. 1, the computer terminal may include one or more (only one is shown in FIG. 1) processors 102 (each of the one or more processors 102 may include, but is not limited to, a processing device such as a Micro-Controller Unit (MCU) or a Field Programmable Gate Array (FPGA)) and a memory 104 configured to store data. The computer terminal may further include a transmission device 106 configured to provide a communication function and an input/output device 108. It will be appreciated by those having ordinary skill in the art that the structure shown in FIG. 1 is merely illustrative and does not limit the structure of the computer terminal. For example, the computer terminal may include more or fewer components than those shown in FIG. 1, or have a configuration different from that shown in FIG. 1.

The memory 104 is configured to store a computer program, for example, software programs and modules of application software, such as a computer program corresponding to the terminal positioning method in the embodiments of the present disclosure. The one or more processors 102 execute various functional applications and data processing, namely, implements the above method, by running the computer program stored in the memory 104. The memory 104 may include a highspeed random access memory, and may further include a non-volatile memory, such as one or more magnetic storage devices, flash memories, or other non-volatile solid-state memories. In some examples, the memory 104 may further include a memory remotely arranged relative to the one or more processors 102; these remote memories may be connected to the computer terminal via a network. Examples of the above network include, but are not limited to, the Internet, an intranet, a local area network, a mobile communication network, and any combination thereof.

The transmission device 106 is configured to receive or send data via a network. A specific example of the above network may include a wireless network provided by a communication service provider of the computer terminal. In one example, the transmission device 106 includes a Network Interface Controller (NIC) that can be connected to other network devices via a base station to communicate with the Internet. In one example, the transmission device 106 may be a Radio Frequency (RF) module configured to communicate with the Internet in a wireless manner.

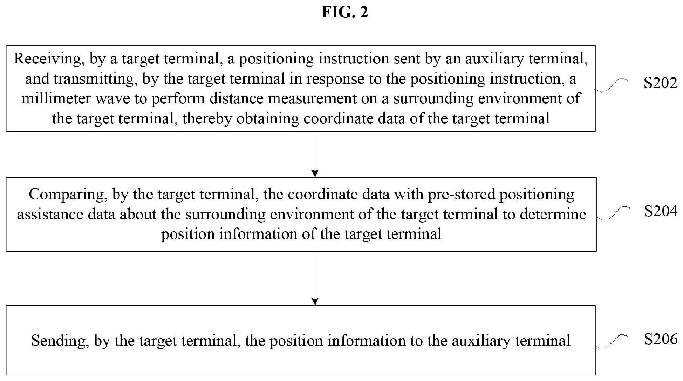

FIG. 2 is a flowchart of a terminal positioning method according to an embodiment of the present disclosure. The embodiment is applied to an indoor scenario. As shown in FIG. 2, the flow includes the following operations S202 to S206.

In operation S202, a target terminal receives a positioning instruction sent by an auxiliary terminal, and transmits, in response to the positioning instruction, a millimeter wave to perform distance measurement on a surrounding environment of the target terminal, thereby obtaining coordinate data of the target terminal.

In modern society, people are highly dependent on target terminals such as mobile phones. Meanwhile, mobile phones are frequently set to a silent mode. In daily life, it is a common occurrence for a user to be unable to recall in which corner of a room his or her mobile phone has been placed, necessitating a prolonged search to find the mobile phone, which causes considerable inconvenience to daily life. However, existing terminal positioning functions are generally applied to large outdoor areas, and there is little dedicated technology specifically designed for terminal positioning in indoor scenarios. Therefore, in an embodiment, in response to a situation where a user cannot determine an accurate position of a target terminal indoors, the user sends a positioning instruction to the target terminal via an auxiliary terminal, wherein the positioning instruction is configured to cause the target terminal to determine its own position after receiving the positioning instruction. For example, the user sends the positioning instruction via a spare terminal to a target terminal located indoors with an unknown specific position, so that the target terminal determines its own position after receiving the positioning instruction.

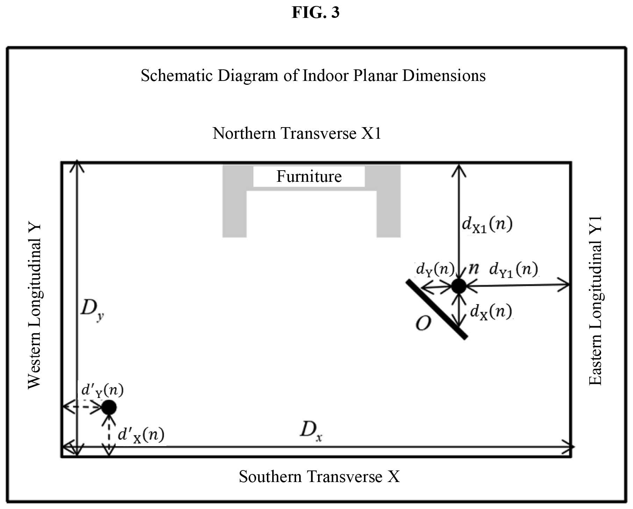

In an embodiment, the target terminal transmits a millimeter wave. When the millimeter wave encounters an obstruction or a wall in the surrounding environment, a portion of the wave is reflected back to the target terminal. The target terminal measures a time difference between transmission of the millimeter wave and reception of the reflected millimeter wave, and multiplies this time difference by a propagation speed of electromagnetic waves in air to determine a distance between the target terminal and the obstruction or wall. The coordinate data is determined according to the distances between the target terminal and obstructions or walls. For example, with reference to the schematic diagram of indoor planar dimensions shown in FIG. 3, it is determined via millimeter wave transmission that the distance between the target terminal and the western longitudinal obstruction is *d*_{Y}(*n*) , the distance between the target terminal and an eastern longitudinal wall is *d*_{Y1}(*n*), the distance between the target terminal and a northern transverse wall is *d*_{X1}(*n*), and the distance between the target terminal and a southern transverse obstruction is *d*_{X}(*n*). The coordinate of the target terminal is n(*d*_{Y}(*n*), *d*_{X}(*n*), *d*_{Y1}(*n*), *d*_{X1}(*n*)) . In an embodiment, the target terminal may transmit the millimeter wave via an equipped millimeter wave module (mmW module). Distance measurement and imaging on the surrounding environment may be achieved via millimeter wave transmission, the coordinate data of the target terminal can be obtained via distance measurement, and feature information of items potentially present in the surrounding environment can be obtained via imaging. The mmW module is capable of 360-degree rotation. The terminal positioning method disclosed in the embodiments of the present disclosure is applied to a scenario where the target terminal is in a horizontal state.

Before receiving, by the target terminal, the positioning instruction sent by the auxiliary terminal in operation S202 of the embodiment of the present disclosure, the method further includes at least one of: receiving, by the target terminal, spatial data and obstruction data of the surrounding environment of the target terminal that are input externally, so as to generate the positioning assistance data; scanning, by the target terminal, a space and obstructions in the surrounding environment of the target terminal via millimeter wave transmission, so as to generate the positioning assistance data.

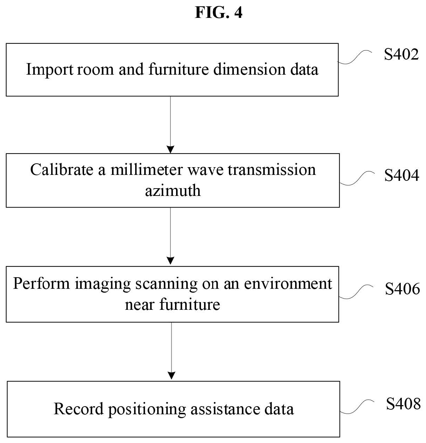

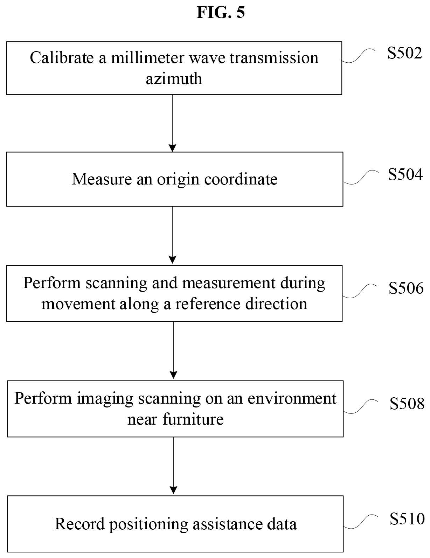

In an embodiment, the terminal positioning method may be applied to terminal positioning in an indoor scenario. Before positioning, the target terminal may obtain the spatial data and the obstruction data via either external input or self-scanning. That is, a user measures boundary dimensions and obstruction data of an environment where the target terminal may be located in advance. FIG. 4, which is a first flowchart of data storage according to an embodiment of the present disclosure, corresponds to the manner of obtaining spatial data and obstruction data via external input. FIG. 5, which is a second flowchart of data storage according to an embodiment of the present disclosure, corresponds to the manner of obtaining spatial data and obstruction data via self-scanning. For example, the user measures dimensional data of walls and furniture, and inputs the measured data into the target terminal. Alternatively, the target terminal transmits a millimeter wave; when the millimeter wave encounters an obstruction (e.g., a wall, furniture, etc.), reflection occurs, the target terminal receives and records these reflection signals, and performs data processing on the reflection signals, including calculating information such as signal strength, distance, and direction. After data processing, the target terminal analyzes the surrounding environment to determine dimensional data and positional relationships of surrounding obstructions.

Through the embodiment of the present disclosure, upon receiving the positioning instruction, the target terminal starts self-positioning. By performing distance measurement on the surrounding environment via millimeter wave transmission, the target terminal obtains coordinate data based on the reflected millimeter wave. Meanwhile, since the target terminal pre-stores positioning assistance data about the surrounding environment, the coordinate data can be compared with the positioning assistance data to finally determine the position information of the target terminal. To enable the user to find the target terminal, the target terminal sends the position information to the auxiliary terminal. Therefore, the problem in related technologies that a terminal located in an indoor scenario cannot be accurately positioned is solved, thereby achieving the effect that the target terminal determines its own position indoors via millimeter wave transmission and with the aid of positioning assistance information.

The flow of the embodiment shown in FIG. 4 includes the following operations S402 to S408.

In operation S402, room dimension data and furniture dimension data are imported.

Specifically, room and furniture dimension data (i.e., length, width, and height) are imported into B1.

In operation S404, a millimeter wave transmission azimuth is calibrated.

Specifically, the millimeter wave transmission azimuth of the mmW module is calibrated to designate a reference direction.

In operation S406, imaging scanning is performed on an environment near furniture.

Specifically, the mmW module is used to scan and image the environment near the furniture.

In operation S408, positioning assistance data is recorded.

Specifically, data obtained in operations S402 to S406 is recorded in a storage module as the positioning assistance data for subsequent use.

The flow of the embodiment shown in FIG. 5 includes the following operations S502 to S510.

In operation S502, a millimeter wave transmission azimuth is calibrated.

Specifically, the millimeter wave transmission azimuth of the mmW module is calibrated to designate a reference direction.

In operation S504, an origin coordinate is measured.

Specifically, the origin coordinate is measured at a distance from a wall on the side opposite the reference direction, wherein the distance is less than a predetermined distance.

In operation S506, scanning and measurement are performed during movement along the reference direction.

Specifically, the mmW module scans during movement along the reference direction. The origin in operation S504 is used as a reference point to obtain indoor boundary dimension data.

In operation S508, imaging scanning is performed on the environment near furniture.

Specifically, the mmW module is used to scan and image the environment near the furniture.

In operation S510, positioning assistance data is recorded.

Specifically, data obtained in operations S502 to S508 is recorded in a storage module as positioning assistance data for subsequent use.

Obtaining spatial data and obstruction data via external input to generate the positioning assistance data is mostly applied to scenarios where there are few walls and little furniture around the indoor perimeter, offering relatively high accuracy. Obtaining spatial data and obstruction data via self-scanning to generate the positioning assistance data is mostly applied to scenarios where there are many walls and much furniture around the indoor perimeter, offering relatively high convenience.

The spatial data of the surrounding environment received or scanned by the target terminal includes room dimension data. The obstruction data of the surrounding environment includes furniture dimension data and positional relationships between pieces of furniture. The spatial data and the obstruction data collectively serve as the positioning assistance data.

In operation S202, transmitting, by the target terminal in response to the positioning instruction, a millimeter wave to perform distance measurement on a surrounding environment of the target terminal includes: transmitting, by the target terminal, the millimeter wave along a horizontal direction and a vertical direction respectively based on spatial orientations of the surrounding environment of the target terminal, so as to perform distance measurement on the surrounding environment of the target terminal.

The target terminal transmits the millimeter wave along the horizontal direction via the mmW module. The mmW module is equipped with a geomagnetic sensor and has a function of identifying an azimuth. A transmission azimuth of the millimeter wave of the mmW module is already bound to an identification direction of the geomagnetic sensor. Thus, a transmission direction of the millimeter wave of the mmW module has a function of identifying a direction. Therefore, the mmW module may determine a transmission direction based on a specific azimuth of a house, that is, the transmission direction corresponds to spatial data. When the mmW module transmits along the horizontal direction, the mmW module has characteristics of distance measurement, imaging, and direction identification. When the mmW module transmits along the vertical direction, the mmW module has characteristics of distance measurement and imaging.

In an embodiment, the target terminal transmits the millimeter wave along the vertical direction, and a distance between the target terminal and a preset top (e.g., a ceiling) is determined according to a reflection distance of the millimeter wave. A distance between the target terminal and the ground may be further determined according to a distance between the preset top and the ground.

In operation S204, the target terminal compares the coordinate data with pre-stored positioning assistance data about the surrounding environment of the target terminal to determine position information of the target terminal.

Since knowing only the coordinate data is insufficient for rapidly and accurately determining the position of the target terminal, it is necessary to combine the positioning assistance data to further determine the environment where the target terminal is located, facilitating the user in rapidly finding the target terminal.

The above operation S204 includes: determining, by the target terminal, whether the target terminal is obstructed according to a quantitative relationship between a sum of millimeter wave reflection distances corresponding to the coordinate data and a dimension of a corresponding boundary, wherein the corresponding boundary is a boundary in the surrounding environment of the target terminal that is parallel to a reflection path of the millimeter wave; and determining the position information of the target terminal according to whether the target terminal is obstructed.

The millimeter wave reflection distance refers to a distance from the target terminal to a wall or an obstruction after the millimeter wave transmitted by the target terminal encounters the obstruction and is reflected back. Since the millimeter wave reflection distance is already obtained when determining the coordinate data, the millimeter wave reflection distance may be used directly.

In an embodiment, after obtaining the coordinate data, the sum of the millimeter wave reflection distances in a transverse direction is determined according to a sum of absolute values of transverse coordinates. The sum of the millimeter wave reflection distances is compared with the length of a transverse wall, wherein the length of the transverse wall is the dimension of the corresponding boundary of the transverse coordinate data. The same applies to a longitudinal direction.

In an embodiment, determining, by the target terminal, whether the target terminal is obstructed according to a quantitative relationship between a sum of millimeter wave reflection distances corresponding to the coordinate data and a dimension of a corresponding boundary includes: determining that the target terminal is obstructed in a case where the sum of the millimeter wave reflection distances is smaller than the dimension of the corresponding boundary; determining that the target terminal is not obstructed in a case where the sum of the millimeter wave reflection distances is equal to the dimension of the corresponding boundary.

With reference to the schematic diagram of indoor planar dimensions shown in FIG. 3, where the coordinate of the target terminal n is n(*d*_{Y}(*n*)*, d*_{X}(*n*)*, d*_{Y1}(*n*)*, d*_{X1}(*n*))*,* the value |*d*_{Y}(*n*)| + |*d*_{Y1}(*n*)| is compared with a length *Dₓ* of a transverse wall, and the value |*d*_{X}(*n*)| + |*d*_{X1}(*n*)| is compared with a length *D_{Y}* of a longitudinal wall. If |*d*_{Y}(*n*)| + |*d*_{Y1}(*n*)| < *Dₓ* or |*d*_{X}(*n*)| + |*d*_{X1}(*n*)| < *D_{Y},* it indicates that the target terminal is obstructed. If |*d*_{Y}(*n*)| + |*d*_{Y1}(*n*)| = *Dₓ* and |*d*_{X}(*n*)| + |*d*_{X1}(*n*)| = *D_{Y}*, it indicates that the target terminal is not obstructed. The length *Dₓ* of the transverse wall and the length *D_{Y}* of the longitudinal wall are both included in the positioning assistance data.

FIG. 3 illustrates two coordinate systems, namely X/Y and X1/Y1. Manually switching X/Y or X1/Y1 as a main coordinate system may be used as an auxiliary means. For example, in FIG. 3, when the X/Y directions of n(*d*_{Y}(*n*), *d*_{X}(*n*), *d*_{Y1}(*n*), *d*_{X1}(*n*)) are obstructed by an obstruction O, if the X1/Y1 coordinate system is used, the obtained coordinate is (*d*_{Y1}(*n*)*, d*_{X1}(*n*))*,* and the position calibrated in this manner is accurate. However, if the X/Y coordinate system is used, the obtained coordinate is *d*'_{Y}(*n*)*, d'*_{X}(*n*)) (where *d'*_{Y}(*n*) = *d*_{Y}(*n*)*, d'*_{X}(*n*) = *d*_{X}(*n*)) , and the position calibrated in this manner is a misjudgment.

In an embodiment, determining the position information of the target terminal according to whether the target terminal is obstructed includes: in a case where the target terminal is obstructed, scanning and imaging, by the target terminal, the surrounding environment of the target terminal, and determining, by the target terminal, the position information of the target terminal according to a result of the scanning and imaging and the positioning assistance data; in a case where the target terminal is not obstructed, determining the position information of the target terminal according to the coordinate data.

If it is determined that the target terminal is obstructed, it is difficult for a user to locate the target terminal based solely on the coordinate data. Therefore, the target terminal needs to scan and image the surrounding environment to obtain data of surrounding obstructions, and further determine the position information of the target terminal based on the data of surrounding obstructions in combination with the positioning assistance data. In a case where it is determined that the target terminal is not obstructed, it indicates that the target terminal is exposed in the spatial environment, and the user can locate the target terminal based on the position information determined by the coordinate data.

In an embodiment, determining the position information of the target terminal according to whether the target terminal is obstructed includes: in a case where the target terminal is obstructed, scanning and imaging, by the target terminal, the surrounding environment of the target terminal, and determining, by the target terminal, the position information of the target terminal according to a distance between the target terminal and a preset top, the result of the scanning and imaging, and the positioning assistance data; in a case where the target terminal is not obstructed, determining, by the target terminal, the position information of the target terminal according to the distance between the target terminal and the preset top, the coordinate data, and the surrounding environment of the target terminal.

Besides scanning and imaging the surrounding environment via transmitting the millimeter wave to determine the coordinate data and further determine the position information of the target terminal, the target terminal may further determine the height of the target terminal based on the distance between the target terminal and the preset top (e.g., a ceiling), thereby achieving more accurate positioning.

In an embodiment, the target terminal transmits the millimeter wave along a vertical direction to determine the distance to the ceiling, and the height at which the target terminal is located can be derived based on the distance to the ceiling in combination with the height of the room.

In operation S206, the target terminal sends the position information of the target terminal to the auxiliary terminal.

Due to having an interaction function, the target terminal sends the position information to the auxiliary terminal after determining its own position. The position information is used by a user to determine the position of the target terminal according to the position information displayed on the auxiliary terminal, so as to find the target terminal.

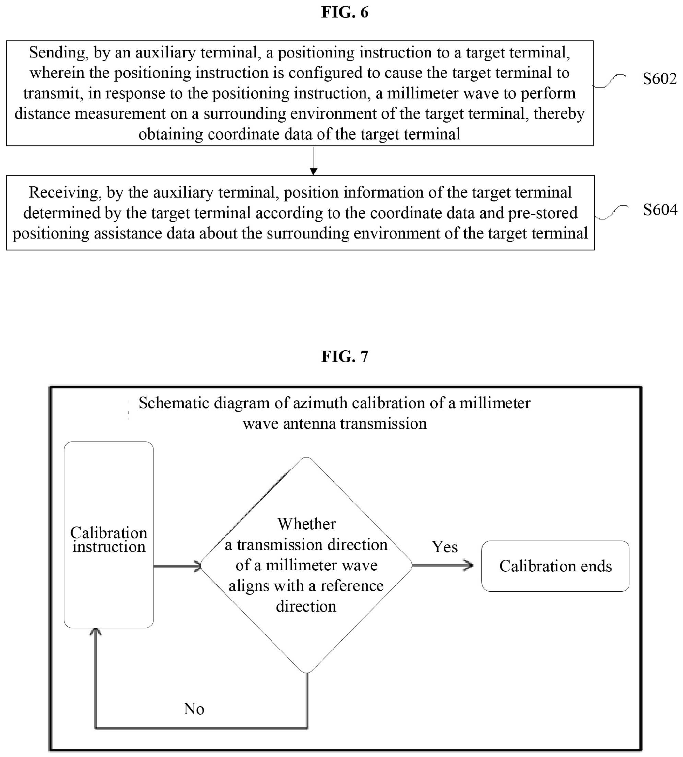

FIG. 6 is a flowchart of a terminal positioning method according to another embodiment of the present disclosure. The embodiment is applied to an auxiliary terminal. As shown in FIG. 6, the flow includes the following operations S602 and S604.

In operation S602, an auxiliary terminal sends a positioning instruction to a target terminal, wherein the positioning instruction is configured to cause the target terminal to transmit, in response to the positioning instruction, a millimeter wave to perform distance measurement on a surrounding environment of the target terminal, thereby obtaining coordinate data of the target terminal.

In an embodiment, in a case where the user cannot determine the position of the target terminal, the user operates the auxiliary terminal to send the positioning instruction to the target terminal. After receiving the positioning instruction, the target terminal performs distance measurement on the surrounding environment via millimeter wave transmission. When the millimeter wave encounters an obstruction or a wall in the surrounding environment, a portion of the wave is reflected back to the target terminal. The target terminal measures a time difference between transmission of the millimeter wave and reception of the reflected millimeter wave, and multiplies this time difference by a propagation speed of electromagnetic waves in air to determine a distance between the target terminal and the obstruction or wall. The coordinate data is determined according to the distances between the target terminal and obstructions or walls. For example, with reference to the schematic diagram of indoor planar dimensions shown in FIG. 3, it is determined via millimeter wave transmission that the distance between the target terminal and the western longitudinal obstruction is *d*_{Y}(*n*), the distance between the target terminal and an eastern longitudinal wall is *d*_{Y1}(*n*) the distance between the target terminal and a northern transverse wall is *d*_{X1}(*n*) and the distance between the target terminal and a southern transverse obstruction is *d*_{X}(*n*) . The coordinate of the target terminal is n(*d*_{Y}(*n*), *d*_{X}(*n*), *d*_{Y1}(*n*), *d*_{X1}(*n*)).

After sending the positioning instruction to the target terminal in operation S602, the method further includes: binding, by the auxiliary terminal, a transmission direction of the millimeter wave transmitted by the target terminal along a horizontal direction with an identification direction of a geomagnetic sensor disposed in the target terminal, so as to set a reference direction.

In an embodiment, the auxiliary terminal and the target terminal cooperate to perform calibration of the transmission direction of the millimeter wave. The target terminal uses an mmW module capable of 360-degree rotation. FIG. 7 is a schematic diagram of azimuth calibration of a millimeter wave antenna of an mmW module according to an embodiment of the present disclosure. The mmW module is equipped with a geomagnetic sensor. A transmission azimuth of the millimeter wave may be bound to a specific identification direction of the geomagnetic sensor via a calibration technique. By utilizing the characteristic that the geomagnetic sensor can identify directions, after sending the positioning instruction to the target terminal, the auxiliary terminal may determine, through an input on a visualization interface of the auxiliary terminal, whether the transmission direction of the millimeter wave aligns with the reference direction. If aligned, the calibration ends; otherwise, the calibration continues. The reference direction may be manually set; any direction such as east, south, west, or north may be set as the reference direction.

In operation S604, the auxiliary terminal receives position information of the target terminal determined by the target terminal according to the coordinate data and pre-stored positioning assistance data about the surrounding environment of the target terminal.

In an embodiment, after the target terminal determines its own position information, the target terminal sends the position information to the auxiliary terminal. Based on the position information displayed on the auxiliary terminal, the user can determine not only the coordinate of the target terminal but also relevant information of the surrounding environment of the target terminal, so as to find the target terminal.

It will be apparent to those having ordinary skill in the art from the foregoing descriptions of the embodiments that the methods according to the above embodiments may be implemented by software in conjunction with a necessary general-purpose hardware platform. Of course, they may also be implemented by hardware, but in many cases, the former is a more preferred embodiment. Based on this understanding, the technical solution of the present disclosure, or the part contributing to the prior art, may be embodied in the form of a software product. The computer software product is stored in a storage medium (e.g., ROM/RAM, a magnetic disk, or an optical disk) and includes several instructions to cause a terminal device (which may be a terminal, a computer, a server, or network equipment, etc.) to execute the methods described in the various embodiments of the present disclosure.

An embodiment of the present disclosure further provides a terminal positioning apparatus. The terminal positioning apparatus is configured to implement the above embodiments and exemplary implementations. Details already described will not be repeated here. As used hereinafter, the term "module" may refer to a combination of software and/or hardware configured to implement a predetermined function. Although the terminal positioning apparatus described in the following embodiments is preferably implemented by software, implementation by hardware, or a combination of software and hardware, is also possible and contemplated.

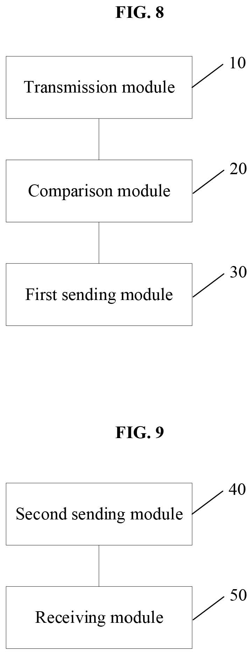

FIG. 8 is a structural block diagram of a terminal positioning apparatus according to an embodiment of the present disclosure. As shown in FIG. 8, the terminal positioning apparatus includes:
a transmission module 10, configured to receive a positioning instruction sent by an auxiliary terminal, and transmitting, by the target terminal in response to the positioning instruction, a millimeter wave to perform distance measurement on a surrounding environment of the target terminal, thereby obtaining coordinate data of the target terminal;
a comparison module 20, configured to compare the coordinate data with pre-stored positioning assistance data about the surrounding environment of the target terminal to determine position information of the target terminal; and
a first sending module 30, configured to send the position information to the auxiliary terminal.

FIG. 9 is a structural block diagram of a terminal positioning apparatus according to another embodiment of the present disclosure. As shown in FIG. 9, the terminal positioning apparatus includes:
a second sending module 40, configured to send a positioning instruction to a target terminal, wherein the positioning instruction is configured to cause the target terminal to transmit, in response to the positioning instruction, a millimeter wave to perform distance measurement on a surrounding environment of the target terminal, thereby obtaining coordinate data of the target terminal; and
a receiving module 50, configured to receive position information of the target terminal determined by the target terminal according to the coordinate data and pre-stored positioning assistance data about the surrounding environment of the target terminal.

The aforementioned modules may be implemented by software or hardware. For the latter, implementation may be achieved, but is not limited to, the following: all the aforementioned modules are located in a single processor; or the aforementioned modules are located in different processors in any combination.

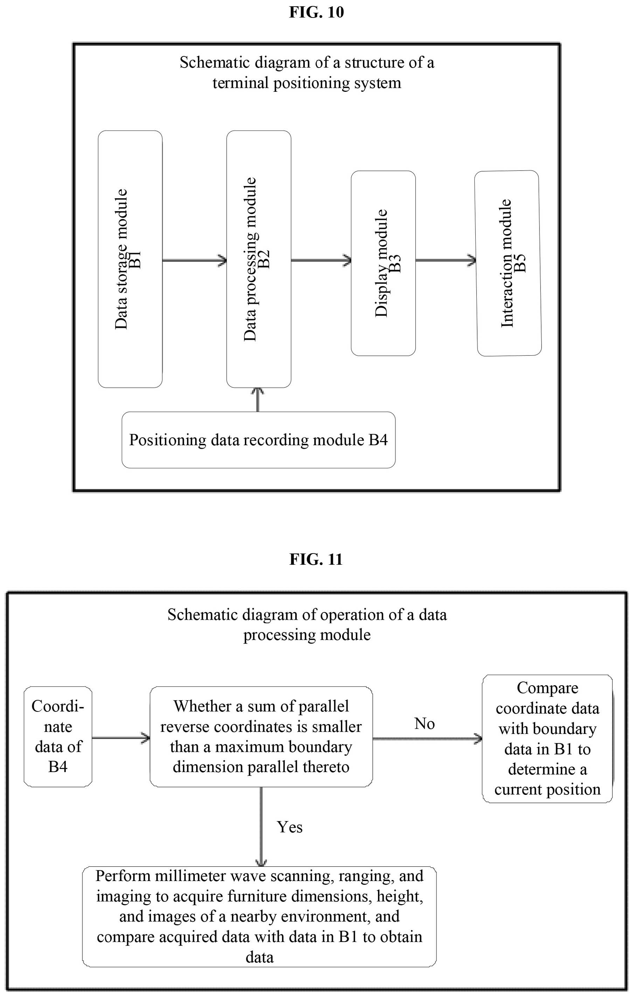

FIG. 10 is a schematic diagram of a structure of a terminal positioning system according to an embodiment of the present disclosure. As shown in FIG. 10, the terminal positioning system includes a data storage module B1, a data processing module B2, a display module B3, a positioning data recording module B4, and an interaction module B5.

The data storage module B1 records positioning assistance data. The data processing module B2 is configured to process data from the data storage module B1 and the positioning data recording module B4. The display module B3 visualizes data from the data processing module B2. The positioning data recording module B4 records relevant positioning data of the target terminal when the target terminal is lost. The interaction module B5 is a human-computer interaction module and may share all relevant positioning data of the target terminal with the auxiliary terminal.

FIG. 11 is a schematic diagram of operation of a data processing module according to an embodiment of the present disclosure. As shown in FIG. 11, after the data processing module B2 obtains data of the target terminal from the positioning data recording module B4, the data processing module B2 first compares a sum of parallel reverse coordinates with a maximum boundary dimension parallel thereto. In a case where the sum of the parallel reverse coordinates is smaller than the maximum boundary dimension parallel thereto, a millimeter wave scanning and ranging module performs scanning, ranging, and imaging to obtain furniture dimensions, height, and images of a nearby environment. The obtained data is compared with data in the data storage module B1 to determine a current position. In a case where the sum of the parallel reverse coordinates is equal to the maximum boundary dimension parallel thereto, coordinate data is compared with boundary data in the data storage module B1 to determine the current position.

An embodiment of the present disclosure further provides a computer-readable storage medium. A computer program is stored on the computer-readable storage medium, and the computer program is configured to, when executed, implement the operations of the method in any of the foregoing method embodiments.

In an exemplary embodiment, the computer-readable storage medium may include, but is not limited to: a Universal Serial Bus (USB) flash drive, a Read-Only Memory (ROM), a Random Access Memory (RAM), a removable hard disk, a magnetic disk, an optical disk, or any other medium capable of storing a computer program.

An embodiment of the present disclosure further provides an electronic device. The electronic device includes a memory and a processor. The computer program is stored on the memory and is executable on the processor. The processor is configured to run the computer program to implement the operations of the method in any of the foregoing method embodiments.

In an exemplary embodiment, the electronic device may further include a transmission device and an input/output device, wherein the transmission device is connected to the processor and the input/output device is connected to the processor.

For specific examples in the present embodiment, reference may be made to the examples described in the foregoing embodiments and exemplary implementations; details will not be repeated here.

It will be apparent to those having ordinary skill in the art that the modules or steps of the present disclosure may be implemented by general-purpose computing devices. They may be centralized on a single computing device or distributed across a network of multiple computing devices. They may be implemented by program code executable by computing devices, such that they may be stored in a storage device and executed by the computing devices. In some cases, the steps shown or described may be executed in an order different from that described herein, or they may be fabricated into individual integrated circuit modules, or multiple modules or steps may be fabricated into a single integrated circuit module for implementation. Thus, the present disclosure is not limited to any specific combination of hardware and software.

The foregoing descriptions are merely exemplary embodiments of the present disclosure and are not intended to limit the present disclosure. Various modifications and changes may be made by those having ordinary skill in the art. Any modification, equivalent replacement, or improvement made within the principles of the present disclosure shall be included in the protection scope of the present disclosure.

## Claims

1. A terminal positioning method, applied to an indoor scenario, comprising:
receiving, by a target terminal, a positioning instruction sent by an auxiliary terminal, and transmitting, by the target terminal in response to the positioning instruction, a millimeter wave to perform distance measurement on a surrounding environment of the target terminal, thereby obtaining coordinate data of the target terminal;
comparing, by the target terminal, the coordinate data with pre-stored positioning assistance data about the surrounding environment of the target terminal to determine position information of the target terminal; and
sending, by the target terminal, the position information to the auxiliary terminal.

2. The method according to claim 1, wherein before receiving, by the target terminal, the positioning instruction sent by the auxiliary terminal, the method further comprises at least one of:
receiving, by the target terminal, spatial data and obstruction data of the surrounding environment of the target terminal that are input externally, so as to generate the positioning assistance data;
scanning, by the target terminal, a space and obstructions in the surrounding environment of the target terminal via millimeter wave transmission, so as to generate the positioning assistance data.

3. The method according to claim 1, wherein transmitting, by the target terminal in response to the positioning instruction, a millimeter wave to perform distance measurement on a surrounding environment of the target terminal comprises:
transmitting, by the target terminal, the millimeter wave along a horizontal direction and a vertical direction respectively based on spatial orientations of the surrounding environment of the target terminal, so as to perform distance measurement on the surrounding environment of the target terminal.

4. The method according to claim 1, wherein comparing, by the target terminal, the coordinate data with pre-stored positioning assistance data about the surrounding environment of the target terminal to determine position information of the target terminal comprises:
determining, by the target terminal, whether the target terminal is obstructed according to a quantitative relationship between a sum of millimeter wave reflection distances corresponding to the coordinate data and a dimension of a corresponding boundary, wherein the corresponding boundary is a boundary in the surrounding environment of the target terminal that is parallel to a reflection path of the millimeter wave; and
determining the position information of the target terminal according to whether the target terminal is obstructed.

5. The method according to claim 4, wherein determining, by the target terminal, whether the target terminal is obstructed according to a quantitative relationship between a sum of millimeter wave reflection distances corresponding to the coordinate data and a dimension of a corresponding boundary comprises:
determining that the target terminal is obstructed in a case where the sum of the millimeter wave reflection distances is smaller than the dimension of the corresponding boundary;
determining that the target terminal is not obstructed in a case where the sum of the millimeter wave reflection distances is equal to the dimension of the corresponding boundary.

6. The method according to claim 4, wherein determining the position information of the target terminal according to whether the target terminal is obstructed comprises:
in a case where the target terminal is obstructed, scanning and imaging, by the target terminal, the surrounding environment of the target terminal, and determining, by the target terminal, the position information of the target terminal according to a result of the scanning and imaging and the positioning assistance data;
in a case where the target terminal is not obstructed, determining the position information of the target terminal according to the coordinate data.

7. The method according to claim 4, wherein determining the position information of the target terminal according to whether the target terminal is obstructed comprises:
in a case where the target terminal is obstructed, scanning and imaging, by the target terminal, the surrounding environment of the target terminal, and determining, by the target terminal, the position information of the target terminal according to a distance between the target terminal and a preset top, the result of the scanning and imaging, and the positioning assistance data;
in a case where the target terminal is not obstructed, determining, by the target terminal, the position information of the target terminal according to the distance between the target terminal and the preset top, the coordinate data, and the surrounding environment of the target terminal.

8. A terminal positioning method, comprising:
sending, by an auxiliary terminal, a positioning instruction to a target terminal, wherein the positioning instruction is configured to cause the target terminal to transmit, in response to the positioning instruction, a millimeter wave to perform distance measurement on a surrounding environment of the target terminal, thereby obtaining coordinate data of the target terminal; and
receiving, by the auxiliary terminal, position information of the target terminal determined by the target terminal according to the coordinate data and pre-stored positioning assistance data about the surrounding environment of the target terminal.

9. The method according to claim 8, wherein after sending, by the auxiliary terminal, the positioning instruction to the target terminal, the method further comprises:
binding, by the auxiliary terminal, a transmission direction of the millimeter wave transmitted by the target terminal along a horizontal direction with an identification direction of a geomagnetic sensor disposed in the target terminal, so as to set a reference direction.

10. A computer-readable storage medium, wherein a computer program is stored on the computer-readable storage medium, and the computer program, when executed by a processor, causes the processor to implement operations of the method according to any one of claims 1 to 7, or operations of the method according to any one of claims 8 to 9.

11. An electronic device, comprising a memory and a processor, wherein the computer program is stored on the memory and is executable on the processor, and the processor executes the computer program to implement the operations of the method according to any one of claims 1 to 7, or implement the operations of the method according to any one of claims 8 to 9.
